# FASCICULE DE BREVET EUROPEEN

(11) **EP 3 638 473 B1**
(45) Date de publication et mention de la délivrance du brevet: **09.03.2022**
(21) Numéro de dépôt: 18752601.7
(22) Date de dépôt: 20.07.2018
(51) Int. Cl.: B28B 1/00, B28B 3/20, B28B 23/00, B29C 48/28, E04G 21/04, E04C 3/20, B29C 64/10, B29C 64/20, B29C 48/02, B29C 48/00

(54) **SYSTÈME D'EXTRUSION DE CORDONS DE MATÉRIAU DE CONSTRUCTION POUR ROBOT DE FABRICATION ADDITIVE DE STRUCTURES ARCHITECTURALES COMPRENANT UN DISPOSITIF D'INSERTION DE FIBRES DE RENFORCEMENT**
SYSTEM ZUM EXTRUDIEREN VON BAUMATERIAL FÜR EINEN ROBOTER ZUR GENERATIVEN FERTIGUNG VON ARCHITEKTURSTRUKTUREN MIT EINER VORRICHTUNG ZUM EINBRINGEN VON VERSTÄRKUNGSFASERN
SYSTEM FOR EXTRUDING BEADS OF BUILDING MATERIAL FOR A ROBOT FOR THE ADDITIVE MANUFACTURE OF ARCHITECTURAL STRUCTURES COMPRISING A DEVICE FOR INSERTING REINFORCING FIBRES

(30) Priorité: 24.08.2017 FR 1757845
(43) Date de publication de la demande: 22.04.2020
(73) Titulaire: Xtreee, 94623 Rungis Cedex (FR)
(72) Inventeur: ROUX, Philippe, 94623 Rungis Cedex (FR); MALLET, Alban, 94623 Rungis Cedex (FR); BOUYSSOU, Charles, 94623 Rungis Cedex (FR); AKHAVAN ZAKERI, Mahriz, 94623 Rungis Cedex (FR)
(74) Mandataire: Bringer IP
(86) Numéro de dépôt international: PCT/FR2018/051866
(87) Numéro de publication internationale: WO 2019/038491

(56) Documents cités:
- EP-A1- 2 886 277
- WO-A1-2016/166116
- DE-A1-102005 062 406
- US-A1- 2017 129 153

## Description

### 1. Domaine technique de l'invention

L'invention concerne la fabrication additive de matériaux de construction. L'invention concerne plus particulièrement une tête d'extrusion de cordons de matériau de construction pour robot de fabrication additive de structures architecturales par empilement de couches successives de cordons extrudés. L'invention concerne également un robot de fabrication additive de structures architecturales comprenant un tel système d'extrusion. L'invention concerne également un procédé d'extrusion de cordons de matériaux de construction.

### 2. Arrière-plan technologique

Dans tout le texte, les termes « matériaux de construction » désignent tous types de matériaux pouvant être utilisés pour produire des structures architecturales par empilement de couches de cordons extrudés de ces matériaux. Il s'agit par exemple de matériaux cimentaires, de matériaux argileux, de matériaux à base de plâtre, et d'une manière générale de tous matériaux à pâtes visqueuses compatibles avec la fabrication additive de structures architecturales.

Dans tout le texte, les termes « structures architecturales » désignent à la fois des éléments de construction individuels (pont, pilier, mur, mobilier urbain, etc.), des structures complètes (bâtiment, maison, immeuble, etc.) et des pièces architecturales diverses (œuvres artistiques, sculptures, etc.).

La fabrication additive de structures architecturales par empilement de couches de cordons extrudés, dont dérive l'impression 3D de matériaux de construction, en particulier de matériau cimentaire, est une nouvelle technologie très prometteuse dans le domaine de l'architecture et de la construction.

En effet, l'impression 3D de matériau de construction apporte de nombreux avantages par rapport aux techniques traditionnelles parmi lesquels notamment la possibilité de pouvoir réaliser des formes complexes par ajout de couches successives de matériau de construction, la rapidité des opérations de construction, la réduction des coûts et de la main d'oeuvre, une sécurité améliorée sur les chantiers, etc.

La maitrise de l'impression 3D de matériau de construction fait appel à des compétences dans le domaine de la mécanique des fluides, la mécanique, l'électronique et le génie civil. L'extrusion de matériau de construction destinée à la fabrication d'une structure architecturale met en œuvre une tête d'extrusion (aussi désignée parfois par les termes de tête d'impression) comprenant une bouche d'entrée de matériau de construction, une buse de sortie de matériau de construction et une pompe de dosage configurée pour pouvoir véhiculer le matériau de construction de la bouche d'entrée vers la buse de sortie. L'extrusion de matériau de construction met également en œuvre un circuit d'alimentation de la tête d'extrusion en matériau de construction comprenant un réservoir de stockage de matériau de construction, une conduite reliant le réservoir de stockage et l'entrée de la tête d'extrusion et une pompe de gavage de la conduite d'alimentation en matériau de construction issu du réservoir de stockage.

La tête d'extrusion est destinée à être déplacée par un système de positionnement tel qu'un bras articulé d'un robot, le long d'une trajectoire prédéterminée, de manière à pouvoir former une pièce architecturale par empilement de couches successives de cordons extrudés.

Il est connu qu'une structure architecturale formée à partir de matériaux à pâtes visqueuses, en particulier de matériaux cimentaires résiste bien à la compression, mais assez peu à la traction.

Dans le cadre des techniques traditionnelles de construction, ce problème a été résolu en utilisant des armatures en acier dans les zones critiques afin de renforcer localement le matériau. Il est également connu d'utiliser du béton fibré qui est un mélange de béton et de fibres réparties dans le béton. Ces fibres sont par exemple des fibres métalliques, polymères, organiques, etc. et jouent le rôle d'armatures infinitésimales.

Cette technique courante dans le domaine de la construction traditionnelle n'est pas transposable dans le domaine de l'impression 3D. En effet, comme indiqué précédemment, un système d'extrusion pour impression 3D met en œuvre une tête d'extrusion comprenant une entrée de matériau de construction, une buse de sortie de matériau de construction, et une pompe de dosage configurée pour pouvoir véhiculer le matériau de construction de la bouche d'entrée vers la buse de sortie. En outre, le système d'extrusion comprend aussi un réservoir de stockage du matériau de construction et un circuit d'alimentation de la tête d'extrusion s'étendant entre le réservoir de stockage et la tête d'extrusion. Ce circuit comprend une pompe de gavage du circuit d'alimentation en matériau de construction.

En d'autres termes, la présence indispensable des pompes de dosage et de gavage ne permet pas d'utiliser un matériau fibré rigide tel qu'il est mis en œuvre dans les techniques traditionnelles, sauf à détériorer rapidement les pompes de dosage et de gavage du système d'extrusion.

Aussi, l'une des solutions utilisées dans le domaine de l'impression 3D de structures architecturales consiste à concevoir en amont des géométries de structures qui limitent les efforts en traction. Cette solution présente bien sûr l'inconvénient de limiter les géométries possibles, ce qui est un frein pour une grande variété de projets d'architecture.

Une autre solution proposée consiste à prévoir, lors de l'impression de la pièce, des cavités qui vont accueillir a posteriori un matériau coulé de renforcement de la structure. Un tel matériau coulé est par exemple du béton armé, du béton précontraint, du béton fibré traditionnel, etc. L'inconvénient de cette solution est qu'elle augmente la durée des chantiers, nécessite une main d'oeuvre importante et impose l'utilisation de matériaux de renforcement spécifiques qui sont parfois coûteux.

Une autre solution proposée consiste à réaliser, préalablement à l'impression de la pièce architecturale, une structure métallique autour de laquelle l'extrusion des cordons de matériau de construction est réalisée. Cette solution présente l'inconvénient de compliquer les opérations en imposant notamment la fabrication d'une armature métallique préalablement à l'impression. En outre, cela complique les opérations de déplacement de la tête d'extrusion autour de l'armature métallique. Des problèmes d'adhérence entre l'armature métallique et le matériau de construction peuvent également apparaître. Enfin, la quantité de matériau de construction à extruder peut être importante pour enrober l'armature.

US2017129153A1 divulgue un système d'extrusion de cordons de matériau selon le préambule de la revendication 1.

Aucune des solutions actuellement proposées n'est totalement satisfaisante. Aussi, les inventeurs ont cherché à proposer une nouvelle solution permettant de renforcer les structures architecturales issues de la fabrication additive de matériau de construction, en particulier la résistance à la traction de ces structures.

### 3. Objectifs de l'invention

L'invention vise donc à fournir un système d'extrusion de matériau de construction, en particulier de matériau cimentaire, qui permet de résoudre au moins certains des inconvénients des solutions antérieures.

L'invention vise en particulier à fournir, dans au moins un mode de réalisation, un système d'extrusion de matériau de construction, en particulier de matériau cimentaire, qui permet de fabriquer des structures architecturales qui résistent à la traction.

L'invention vise aussi à fournir, dans au moins un mode de réalisation de l'invention, un système d'extrusion qui permet de fabriquer des structures architecturales dont la géométrie n'est pas imposée par des contraintes de résistance à la traction.

L'invention vise aussi à fournir, dans au moins un mode de réalisation de l'invention, un système d'extrusion qui permet la fabrication de structures architecturales de manière précise, stable, répétable et à moindre coût.

L'invention vise aussi à fournir, dans au moins un mode de réalisation de l'invention, un système d'extrusion qui permet de renforcer la cohésion de deux couches de cordons superposées.

L'invention vise aussi à fournir un robot équipé d'un système d'extrusion de cordons de matériau de construction selon l'invention.

L'invention vise enfin à fournir un procédé d'extrusion de cordons de matériau de construction.

### 4. Exposé de l'invention

Pour ce faire, l'invention concerne un système d'extrusion de cordons de matériau de construction pour robot de fabrication additive de structures architecturales comprenant :
- une tête d'extrusion de cordons de matériau de construction comprenant une bouche d'entrée de matériau de construction, une buse de sortie configurée pour former des cordons de matériau de construction et une pompe de dosage configurée pour pouvoir véhiculer le matériau de construction de la bouche d'entrée vers la buse de sortie, ladite tête étant destinée à être déplacée par le robot de fabrication additive selon une trajectoire prédéterminée pour former une structure architecturale par empilement de couches desdits cordons extrudés,
- un circuit d'alimentation en matériau de construction de ladite tête d'extrusion comprenant un réservoir de stockage de matériau de construction, une conduite d'alimentation en matériau de construction reliant ledit réservoir de stockage et ladite tête d'extrusion, et une pompe de gavage de ladite conduite d'alimentation en matériau de construction issu du réservoir de stockage.

Un système d'extrusion selon l'invention est caractérisé en ce qu'il comprend en outre un dispositif de projection de fibres de renforcement structurel des cordons extrudés adapté pour pouvoir projeter et insérer, dans les cordons extrudés par ladite tête d'extrusion, des fibres de renforcement structurel de ces cordons, ledit dispositif de projection comprenant :
- une source de fibres,
- des moyens de propulsion des fibres dans les cordons extrudés,
- des moyens de convoyage des fibres de la source de fibres vers les moyens de propulsion des fibres.

Un système selon l'invention comprend donc un dispositif configuré pour pouvoir projeter et insérer des fibres de renforcement dans les cordons extrudés. Un système selon l'invention permet donc de renforcer les cordons et notamment leur résistance à la traction en insérant dans les cordons extrudés des fibres de renforcement. Aussi, les fibres ne sont pas mélangées au matériau de construction préalablement à la fabrication d'une structure architecturale et ne risquent donc pas de détériorer les pompes de gavage et de dosage du système d'extrusion, mais sont insérées dans les cordons extrudés après leur sortie de la tête d'extrusion. En d'autres termes, les fibres ne sont pas convoyées par le circuit d'alimentation et par la tête d'extrusion, mais insérées après la dépose des cordons de matériau cimentaire.

En outre et selon l'invention, les fibres sont projetées vers les cordons extrudés, c'est à dire propulser vers les cordons extrudés pour s'y insérer. Un tel dispositif de projection comprend une source de fibres, qui peut être de tout type. Il peut s'agir d'une source de fibres individuelles fournies en vrac dans un réservoir de fibres, tel qu'une trémie, ou une fibre continue qui est découpée préalablement à l'insertion dans les cordons extrudés. Cette variante prévoit également des moyens de convoyage des fibres jusqu'à des moyens de propulsion des fibres dans les cordons extrudés.

Avantageusement et selon l'invention, les moyens de propulsion des fibres sont configurés pour propulser les fibres dans les cordons extrudés selon une direction non-colinéaire à la direction le long de laquelle les cordons extrudés s'étendent après extrusion.

Avantageusement, la direction des fibres projetées dans les cordons extrudés coïncide avec la direction des sollicitations prépondérantes des charges de la structure une fois fabriquée.

Cette projection selon une direction non-colinéaire à la direction le long de laquelle s'étendent les cordons après extrusion permet de renforcer la cohésion entre deux cordons extrudés superposés. La configuration du dispositif de propulsion permettant cette propulsion des fibres selon une direction non-colinéaire, par exemple perpendiculaire, à la direction des cordons dépend de l'orientation du dispositif de propulsion et/ou de la structure du dispositif.

Avantageusement et selon cette variante de l'invention, les fibres sont métalliques et les moyens de propulsion des fibres métalliques comprennent un électroaimant creux agencé autour d'un tube de guidage des fibres métalliques, ledit électroaimant étant relié à une source d'alimentation électrique de manière à pouvoir créer un champ magnétique de propulsion des fibres métalliques dans ledit tube de guidage.

Cette variante de l'invention particulièrement avantageuse prévoit des fibres métalliques, à tout le moins ferromagnétiques, et des moyens de propulsion magnétique des fibres métalliques vers les cordons extrudés. Ces moyens de propulsion magnétique permettent d'insérer les fibres dans les cordons sans contact mécanique entre les moyens de propulsion et les fibres. La propulsion magnétique des fibres met en œuvre un électroaimant, tel qu'un solénoïde, alimenté par une source d'énergie électrique. L'alimentation en courant du solénoïde crée un champ magnétique dans le tube de guidage, ce qui permet de propulser les fibres métalliques à l'intérieur du tube et de les éjecter à l'extérieur du tube vers les cordons extrudés. Pour ce faire, le tube de guidage doit être orienté de telle sorte que sa sortie soit orientée vers les cordons extrudés à renforcer.

Avantageusement et selon cette variante, la source d'alimentation comprend des dispositifs de contrôle de l'énergie électrique fournie audit électroaimant reliés à une unité de commande de ces dispositifs de contrôle de manière à pouvoir paramétrer la profondeur de pénétration des fibres projetées dans les cordons extrudés.

Cette variante avantageuse permet de contrôler la profondeur de pénétration des fibres en contrôlant l'énergie fournie à l'électroaimant. Ces dispositifs de contrôle sont par exemple des condensateurs.

Selon une autre variante, les moyens de propulsion comprennent une source d'air comprimé configurée pour pouvoir libérer une quantité d'air prédéterminée sur commande de manière à propulser la fibre vers les cordons extrudés à renforcer, potentiellement par l'intermédiaire d'une pièce mécanique telle qu'un piston.

Quel que soit le mode de réalisation des moyens de propulsion, les moyens de convoyage comprennent avantageusement des rouleaux de convoyage des fibres de ladite source de fibres vers lesdits moyens de propulsion des fibres.

Ces rouleaux de convoyage permettent de déplacer les fibres de la source de fibres jusqu'aux moyens de propulsion. Ces rouleaux sont par exemple entrainés en rotation par des moteurs électriques ou tous moyens équivalents et viennent en appui contre les fibres pour les déplacer de la source de fibres vers les moyens de propulsion.

Selon une variante avantageuse, lesdits rouleaux de convoyage sont logés dans ledit tube de guidage.

Selon une variante avantageuse, la source de fibres comprend au moins une bobine continue de fibres associée à des moyens de découpe de la bobine en fibres individuelles.

Cette variante prévoit une bobine de fibres, qui est par exemple formée d'une bobine de fil métallique, associée à des moyens de découpe du fil de la bobine pour former des fibres de dimension adaptée à la projection dans les cordons extrudés.

Avantageusement, lesdits moyens de découpe du fil de la bobine sont formés par au moins un rouleau de convoyage équipé d'au moins une incision de découpe configurée pour pouvoir couper le fil de la bobine au moment du contact entre l'incision de découpe du rouleau de guidage et le fil de la bobine.

Cette variante avantageuse met en œuvre au moins un rouleau, de préférence une paire de rouleaux agencés en opposition de part et d'autre du fil métallique, comprenant une incision de découpe, de sorte que lors du passage du fil sur l'incision de découpe, le fil métallique se coupe pour former une fibre, qui peut alors être projetée vers un cordon extrudé par les moyens de propulsion, qui sont de préférence des moyens de propulsion magnétique. Dans le cas où les rouleaux de convoyage sont logés dans le tube de guidage, les moyens de propulsion sont de préférence agencés en aval des rouleaux de découpe de sorte que la fibre puisse être projetée dès que la découpe de la fibre est réalisée.

Avantageusement et selon l'invention, le dispositif d'insertion de fibres est porté par la tête d'extrusion par l'intermédiaire d'un support de montage.

Cette variante avantageuse permet de lier les déplacements de la tête d'extrusion aux déplacements du dispositif d'insertion de fibres. En particulier, cette variante avantageuse permet d'insérer les fibres de renforcement de manière synchronisée avec l'extrusion des cordons.

Selon une variante de l'invention, la tête d'extrusion comprend un carter s'étendant le long d'une direction, dite direction longitudinale, et le support de montage portant le dispositif d'insertion est monté mobile en rotation sur le carter de la tête d'extrusion autour d'un axe s'étendant le long de ladite direction longitudinale.

Aussi, le dispositif d'insertion de fibres peut être positionné en regard de n'importe quel cordon extrudé, quelle que soit son orientation. En particulier, cette variante permet de renforcer les cordons au niveau des courbures et angles de la structure architecturale.

L'invention concerne également un robot de fabrication additive de structures architecturales comprenant un système de positionnement, tel qu'un bras articulé, piloté par une unité de commande, et un système d'extrusion comprenant une tête d'extrusion montée sur ledit système de positionnement de sorte que le déplacement du système de positionnement portant ladite tête d'extrusion selon une trajectoire prédéterminée permette la fabrication d'une structure architecturale par empilement de couches de cordons de matériau de construction, caractérisé en ce que ledit système d'extrusion est conforme à l'invention.

L'invention concerne également un procédé d'extrusion de cordons de matériau cimentaire pour robot de fabrication additive de structures architecturales comprenant :
- une étape d'alimentation en matériau cimentaire d'une tête d'extrusion de cordons de matériau cimentaire à partir d'un réservoir de stockage de matériau cimentaire,
- une étape d'extrusion de cordons de matériau cimentaire par une tête d'extrusion comprenant une bouche d'entrée de matériau cimentaire et une buse de sortie configurée pour former des cordons de matériau cimentaire,
- une étape de renforcement des cordons extrudés par insertion de fibres de renforcement structurel dans les cordons extrudés, utilisant le robot.

Un procédé selon l'invention est avantageusement mis en œuvre par un système d'extrusion selon l'invention et un système d'extrusion selon l'invention met avantageusement en œuvre un procédé selon l'invention.

L'invention concerne également un système d'extrusion et un robot de fabrication additive caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un système d'extrusion selon un mode de réalisation de l'invention,
- la figure 2 est une vue schématique d'une tête d'extrusion d'un système d'extrusion selon un mode de réalisation de l'invention,
- la figure 3 est une vue schématique d'un dispositif de projection de fibres monté sur une tête d'extrusion, partiellement représentée, d'un système d'extrusion selon un mode de réalisation de l'invention,
- la figure 4 est une vue schématique détaillée des moyens de propulsion et des moyens de guidage d'un dispositif de projection d'un système d'extrusion selon un mode de réalisation de l'invention,
- la figure 5 est une vue schématique d'un robot de fabrication additive selon un mode de réalisation de l'invention,
- la figure 6 est une vue schématique d'un procédé d'extrusion selon un mode de réalisation de l'invention.

### 6. Description détaillée d'un mode de réalisation de l'invention

Sur les figures, les échelles et les proportions ne sont pas strictement respectées et ce, à des fins d'illustration et de clarté. Dans toute la description détaillée qui suit en référence aux figures, sauf indication contraire, chaque élément du système d'extrusion est décrit tel qu'il est agencé lorsque le système d'extrusion est mis en œuvre dans le cadre de la fabrication d'une structure architecturale par empilement de couches de cordons extrudés.

En outre, les éléments identiques, similaires ou analogues sont désignés par les mêmes références dans toutes les figures.

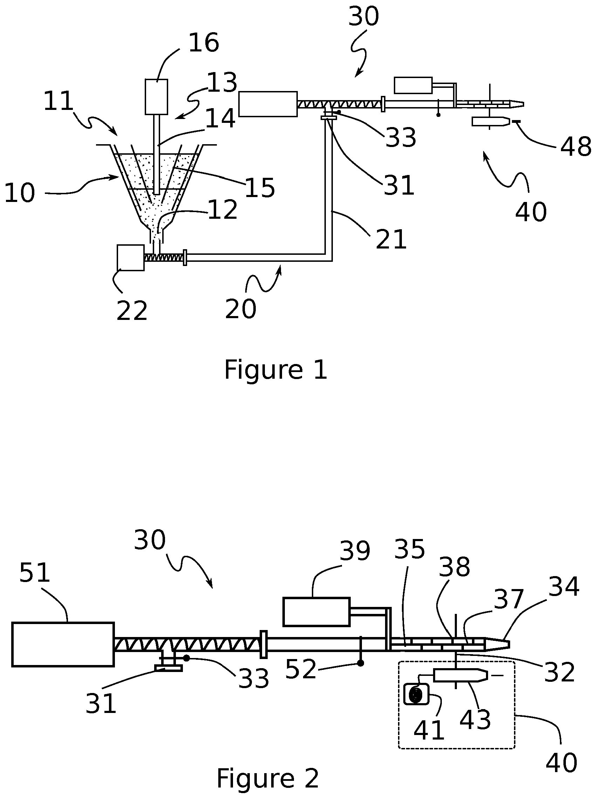

Un système d'extrusion selon l'invention comprend, tel que représenté sur la figure 1, un réservoir de stockage 10 d'un matériau de construction, une tête d'extrusion 30, un circuit 20 d'alimentation en matériau de construction de la tête d'extrusion, agencé entre le réservoir de stockage 10 et la tête d'extrusion 30, et un dispositif de projection 40 de fibres 48 de renforcement des cordons extrudés.

Dans toute la suite, l'invention est décrite en considérant que le matériau utilisé est un matériau cimentaire, étant entendu que n'importe quel autre matériau de construction à pâte visqueuse tel que défini dans le texte peut être utilisé dans le cadre de cette invention.

Chacun des différents organes du système vont maintenant être décrits en détail.

### Réservoir de stockage

Le réservoir de stockage 10 est de préférence une trémie comprenant une ouverture supérieure 11 adaptée pour recevoir des gâchées de matériaux cimentaires et une sortie inférieure 12 reliée au circuit 20 d'alimentation. La trémie peut en outre comprendre un agitateur 13 comprenant un arbre 14 portant une pluralité de pales latérales 15 par l'intermédiaire d'axes perpendiculaires à l'arbre 14, et un moteur 16 de mise en rotation de l'arbre 14. Le moteur 16 est par exemple un moteur électrique configuré pour pouvoir entraîner à faible vitesse, par exemple à une vitesse de six tours par minute, l'arbre 14 de l'agitateur 13. L'utilisation d'un moteur thermique est bien sûr possible sans modifier les performances du système d'extrusion selon l'invention. Le rôle de l'agitateur est de pouvoir maintenir le matériau cimentaire dans la trémie à un état rhéologique quasi-constant avant d'être conduit vers la tête d'impression par le circuit 20 d'alimentation.

Le matériau cimentaire utilisé est par exemple un prémix à base de ciment avec des particules fines, hydraté et fluidifié.

### Circuit d'alimentation

Le circuit d'alimentation 20 relie le réservoir de stockage 10 à la tête d'extrusion 30. Ce circuit comprend une conduite 21 reliant la sortie 12 du réservoir de stockage 10 à une bouche d'entrée 31 de la tête d'extrusion 30. Le circuit d'alimentation 20 comprend en outre une pompe de gavage 22. Cette pompe de gavage 22 est par exemple asservie en pression/débit par un capteur de pression 33 agencé au voisinage de la bouche d'entrée 31 de la tête d'extrusion 30. Cette pompe de gavage 22 est par exemple une pompe à vis excentrée de manière à pouvoir véhiculer le matériau cimentaire vers la tête d'extrusion 30 en minimisant les pulsations. Cette pompe de gavage 22 est par exemple une pompe commercialisée sous les références Putzmeister^{®} FP-V Mono. Bien entendu, d'autres pompes peuvent être utilisées sans modifier les performances de l'invention.

### Tête d'extrusion

La tête d'extrusion 30 comprend, tel que représenté schématiquement par la figure 2, une bouche d'entrée 31 reliée au circuit d'alimentation 20 et une buse 34 de sortie configurée pour former des cordons de matériau cimentaire.

La tête d'extrusion comprend en outre une enceinte de mélange 35 agencée en amont de la buse 34 de sortie. Cette enceinte de mélange 35 est équipée d'un mélangeur dynamique adapté pour pouvoir mélanger le matériau cimentaire et d'éventuels adjuvants fournis par un dispositif additionnel d'adjuvantation non représenté sur les figures.

Ce mélangeur dynamique comprend par exemple un arbre 37 s'étendant longitudinalement dans l'enceinte de mélange 35 sur lequel sont montés des doigts radiaux 38 répartis le long de l'arbre 37. Le mélangeur dynamique comprend également un moteur 39 configuré pour pouvoir entrainer l'arbre 37 en rotation de manière à pouvoir fournir un mélange homogène du matériau cimentaire. Ce moteur 39 peut être un moteur électrique, un moteur thermique, et de manière générale tous types de moteurs. Selon le mode de réalisation des figures, le moteur 39 est déporté par rapport à l'arbre 37.

La tête d'extrusion 30 comprend également une pompe de dosage 51 à vis excentrée configurée pour pouvoir véhiculer le matériau cimentaire de la bouche d'entrée 31 vers la buse de sortie, en passant par l'enceinte de mélange 35. Une telle pompe de dosage est par exemple une pompe commercialisée sous les références Viscotec^{®} 3VMP36. Bien entendu, d'autres pompes peuvent être utilisées sans modifier les performances de l'invention.

Selon un autre mode de réalisation non représenté sur les figures, la pompe de dosage 51 est remplacée par un doseur volumétrique configuré pour pouvoir assurer un débit constant sur une plage prédéterminée de fonctionnement.

La tête d'extrusion 30 comprend également un capteur de pression 52 de sécurité agencé en amont de l'enceinte de mélange 35. Ce capteur est par exemple un capteur commercialisé sous les références ifm^{®} PF2953. Bien entendu, d'autres capteurs peuvent être utilisés sans modifier les performances de l'invention. Ce capteur 52 de sécurité permet de mesurer le pression en amont de l'enceinte de mélange 35 de manière à pouvoir prévenir des risques de bouchage de l'enceinte de mélange 35 ou de la buse de sortie 34. Ce capteur peut par exemple être relié à un système d'arrêt automatique du système d'extrusion dès qu'un seuil de pression est atteint.

La buse de sortie 34 de la tête d'impression est de préférence démontable de manière à pouvoir adapter la forme de la buse de sortie 34 à la pièce à fabriquer. En particulier, la section de la buse de sortie 34 peut être adaptée à chaque type de pièce fabriquée, voir changée en cours d'impression pour modifier la section des cordons de certaines portions de la pièce fabriquée. Pour ce faire, la buse de sortie comprend par exemple une paroi externe filetée qui coopère avec une portion interne filetée de la paroi de la tête d'impression délimitant l'enceinte de mélange 35. Selon une autre variante, la buse de sortie comprend une paroi interne filetée qui coopère avec une portion externe filetée de la paroi de la tête d'impression.

### Dispositif de projection de fibres

Le dispositif de projection 40 selon le mode de réalisation des figures comprend une source de fibres 41, des moyens de propulsion 43 des fibres dans les cordons extrudés, et des moyens de convoyage 42 des fibres de la source de fibres vers les moyens de propulsion 43 des fibres.

Les fibres peuvent être de tous types, par exemple des fibres métalliques, des fibres de verres, des fibres de carbone, des fibres naturelles, etc.

Selon le mode de réalisation des figures, les fibres sont métalliques et sont obtenues par la découpe d'un fil métallique continu 45.

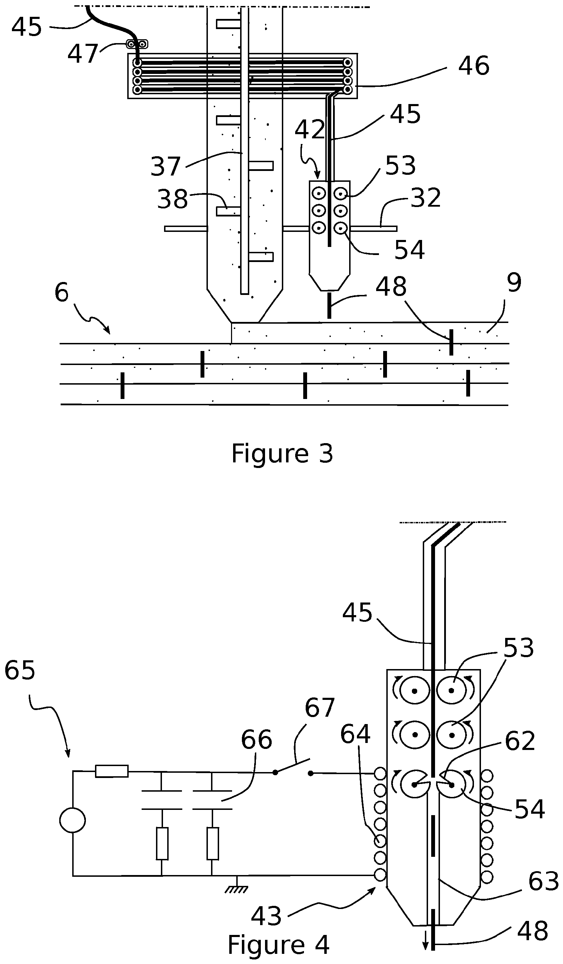

Ce fil métallique continu 45 est de préférence et tel que représenté sur la figure 3 logé dans une cassette 46 portée par le carter de la tête d'extrusion 30. Cette cassette 46 présente une ouverture inférieure par laquelle le fil 45 atteint les moyens de convoyage 42 et les moyens de propulsion 43 des fibres, ainsi qu'un dispositif d'alimentation et d'entraînement 47 du fil continu 45 dans la cassette 46 en provenance d'une source extérieure de fil métallique non représentée sur la figure 3. La cassette 46 est fixe par rapport à la tête d'extrusion 30 et les moyens de convoyage 42 et les moyens de propulsion 43 sont portés par un support mobile 32 en rotation autour de la tête d'extrusion 30. L'ouverture inférieure par laquelle le fil 45 atteint les moyens de convoyage 42 et les moyens de propulsion 43 est circulaire et s'étend autour de l'axe principal de la tête d'extrusion.

Selon un autre mode de réalisation non représenté sur les figures, la cassette 46 loge l'intégralité du fil métallique continu 45 destiné à former les fibres de renforcement de sorte que le dispositif d'alimentation 47 de la cassette par une source extérieure de fil continu n'est pas nécessaire. Selon cette variante de réalisation, une fois la cassette 46 vidée de son fil métallique, la cassette est remplacée par une autre cassette pleine ou la cassette 46 est garnie d'un nouveau fil métallique continu.

Selon une autre variante non représentée sur les figures, les moyens de convoyage sont directement alimentés en fil métallique par une source extérieure de fil métallique de sorte que la cassette n'est pas nécessaire.

Les moyens de convoyage 42 et les moyens de propulsion 43 sont représentés plus en détail sur la figure 4.

Selon le mode de réalisation des figures, les moyens de convoyage 42 comprennent des rouleaux 53, 54 de convoyage des fibres vers les moyens de propulsion 43 des fibres. Ces rouleaux vont par paire et sont entrainés en rotation dans des sens inverse l'un de l'autre de manière à pouvoir tirer le fil 45 vers le bas en direction des moyens de propulsion.

Les rouleaux 54 de convoyage présentent en outre, tel que représenté sur la figure 4, des incisions 62 de découpe configurées pour pouvoir couper le fil 45 de la bobine au moment du contact entre l'incision 62 de découpe du rouleau de guidage 54 et le fil 45 de la bobine. Cela permet de former des fibres de longueur réduite compatible avec l'insertion de la fibre dans les cordons extrudés.

Le dispositif de projection comprend également des moyens de propulsion 43 des fibres 48 vers les cordons extrudés.

Tel que représenté sur la figure 4, les moyens de propulsion 43 sont par exemple formés par un canon magnétique. Ce canon magnétique comprend un tube de guidage 63, un électroaimant 64 formé par un solénoïde agencé autour du tube de guidage 63 et une source 65 d'alimentation de cet électroaimant 64.

L'alimentation de l'électroaimant 64 par la source 65 d'alimentation permet de créer un champ magnétique dans le tube de guidage 63, ce qui entraine la propulsion des fibres 48 métalliques dans ledit tube de guidage en direction des cordons extrudés.

Selon le mode de réalisation de la figure 4, la source 65 d'alimentation comprend deux condensateurs 66 montés en parallèle et reliés à un interrupteur 67 de commande, de manière à pouvoir contrôler l'intensité du champ magnétique généré dans le tube de guidage 63, et donc de contrôler la profondeur de pénétration des fibres 48 projetées dans les cordons extrudés 9.

Selon le mode de réalisation des figures, le dispositif de projection de fibres est monté directement sur le carter de la tête d'extrusion par l'intermédiaire d'un support de montage 32. Ce support de montage peut être monté mobile en rotation autour de l'axe principal de la tête d'extrusion de manière à pouvoir déplacer le dispositif de projection de fibres autour de la tête d'extrusion.

Selon un autre mode de réalisation non représenté sur les figures, le canon magnétique est remplacé par des moyens de propulsion mécaniques des fibres comprenant par exemple des rouleaux mécaniques présentant une surface d'adhérence compatible avec le matériau des fibres et configurés pour pouvoir entrer en contact mécanique avec les fibres et les propulser vers les cordons extrudés. Ces rouleaux mécaniques sont par exemple des rouleaux agencés après les rouleaux à incision 62 permettant de former des fibres individuelles des moyens de convoyage. Ces rouleaux, dits rouleaux de propulsion, vont par paire et sont entrainés en rotation dans des sens inverses l'un de l'autre à une vitesse élevée de manière à pouvoir propulser les fibres individuelles vers les cordons extrudés. La distance qui sépare les rouleaux de propulsion d'une paire de rouleaux est définie en fonction du diamètre des fibres. De préférence, cette distance est légèrement inférieure au diamètre des fibres et les rouleaux sont faits en un matériau légèrement déformable radialement pour que ces derniers puissent recevoir une fibre entre eux, l'accélérer et l'éjecter vers les cordons extrudés.

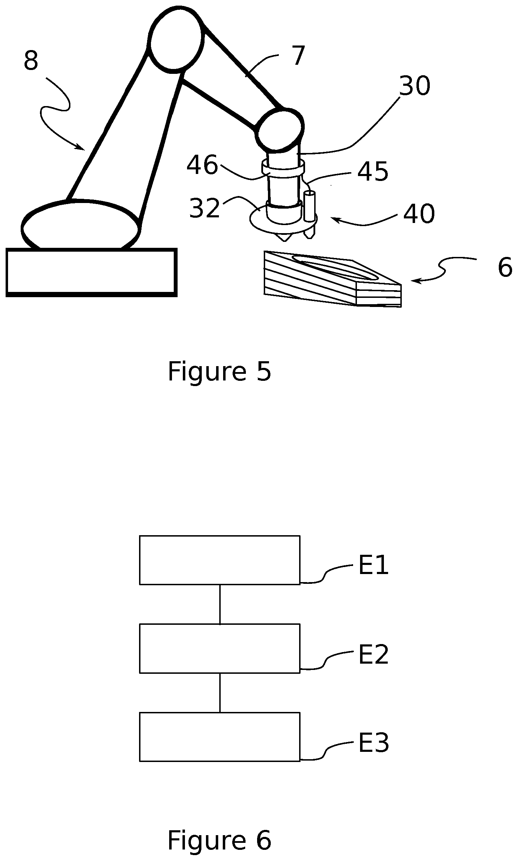

La figure 5 est une vue schématique d'un robot 8 de fabrication additive de structures architecturales selon un mode de réalisation de l'invention. Un tel robot comprend un bras articulé 7, piloté par une unité de commande non représentée sur les figures qui porte la tête d'extrusion 30 d'un système d'extrusion selon l'invention. Sur la figure 5, seuls la tête d'extrusion 30 et le dispositif de projection 40 de fibres sont représentés à des fins de clarté, étant entendu que la tête d'extrusion 30 est alimentée en matériau cimentaire par un circuit d'alimentation et un réservoir de stockage tel que décrit précédemment.

Le robot est commandé par une unité de commande pour entrainer le déplacement de la tête d'extrusion 30 suivant une trajectoire prédéterminée permettant de fabriquer une structure architecturale par empilement de couches de cordons extrudés.

Le dispositif de projection de fibres 40 porté par la tête d'extrusion permet de renforcer les structures architecturales ainsi fabriqués par des fibres de renforcement structurel.

La figure 6 est une vue schématique d'un procédé d'extrusion de cordons de matériau cimentaire pour robot de fabrication additive de structures architecturales selon l'invention.

Un tel procédé comprend une première étape E1 d'alimentation en matériau de construction, tel qu'un matériau cimentaire, de la tête d'extrusion 30 de cordons de matériau cimentaire à partir d'un réservoir de stockage 10 de matériau cimentaire.

Le procédé comprend une étape subséquente E2 d'extrusion de cordons de matériau cimentaire par la tête d'extrusion 30 suivant une trajectoire prédéterminée.

Le procédé comprend en outre une étape concomitante ou immédiatement subséquente à l'extrusion de chaque cordon, de renforcement E3 des cordons extrudés par projection de fibres de renforcement structurel dans les cordons extrudés.

Un procédé selon l'invention est de préférence mis en œuvre par un robot selon l'invention.

L'invention ne se limite pas aux seuls modes de réalisation décrits. En particulier, selon d'autres modes de réalisation, le robot peut être un robot six axes, monté sur rails ou non, sur portique ou non. Le robot peut également être un robot à câbles ou tous types de robots dont le système de positionnement, tel qu'un bras articulé, peut être piloté par ordinateur.

Un robot selon l'invention peut être utilisé pour fabriquer tous types de pièces architecturales. Une telle pièce architecturale peut être une pièce de renfort, un bâtiment, et de manière générale, toute pièce en matériau cimentaire. Les pièces architecturales fabriquées par l'utilisation d'un système d'extrusion selon l'invention peuvent être d'échelles variées. Il peut s'agir d'une portion de poteau, d'un poteau entier, d'un mur, d'un élément de dalle, d'un bâtiment, d'un mobilier urbain, d'une sculpture, etc.

## Revendications

1. Système d'extrusion de cordons (9) de matériau de construction pour robot (8) de fabrication additive de structures architecturales (6) comprenant :
- une tête d'extrusion (30) de cordons de matériau de construction comprenant une bouche d'entrée (31) de matériau de construction, une buse de sortie (34) configurée pour former des cordons (9) de matériau de construction et une pompe de dosage (51) configurée pour pouvoir véhiculer le matériau de construction de la bouche d'entrée (31) vers la buse de sortie (34), ladite tête d'extrusion (30) étant destinée à être déplacée par le robot (8) de fabrication additive selon une trajectoire prédéterminée pour former une structure architecturale (6) par empilement de couches desdits cordons (8) extrudés,
- un circuit d'alimentation (20) en matériau de construction de ladite tête d'extrusion (30) comprenant un réservoir de stockage (10) de matériau de construction, une conduite d'alimentation (21) en matériau de construction reliant ledit réservoir de stockage (10) et ladite tête d'extrusion (30), et une pompe de gavage (22) de ladite conduite d'alimentation (21) en matériau de construction issu du réservoir de stockage (10),
**caractérisé en ce qu'**il comprend en outre un dispositif de projection (40) de fibres (48) de renforcement structurel des cordons (9) extrudés adapté pour pouvoir projeter et insérer dans les cordons extrudés par ladite tête d'extrusion, des fibres (48) de renforcement structurel de ces cordons, ledit dispositif de projection de fibres comprenant:
- une source (41) de fibres,
- des moyens de propulsion (43) des fibres dans les cordons extrudés,
- des moyens de convoyage (42) des fibres de la source (41) de fibres vers les moyens de propulsion (43) des fibres.

2. Système selon la revendication 1, **caractérisé en ce que** lesdits moyens de propulsion (43) des fibres sont configurés pour propulser les fibres (48) dans les cordons (9) extrudés selon une direction non-colinéaire à la direction le long de laquelle les cordons extrudés s'étendent après extrusion.

3. Système selon l'une des revendications 1 ou 2, **caractérisé en ce que** lesdites fibres (48) sont métalliques et **en ce que** lesdits moyens de propulsion (43) des fibres métalliques comprennent un électroaimant (64) creux agencé autour d'un tube de guidage (63) des fibres métalliques, ledit électroaimant (64) étant relié à une source d'alimentation électrique (65) de manière à pouvoir créer un champ magnétique de propulsion des fibres (48) métalliques dans ledit tube de guidage (63).

4. Système selon la revendication 3, **caractérisé en ce que** ladite source d'alimentation électrique (65) comprend des dispositifs de contrôle (66) de l'énergie électrique fournie audit électroaimant (64) reliés à une unité de commande des dispositifs de contrôle (66) de manière à pouvoir paramétrer la profondeur de pénétration des fibres (48) projetées dans les cordons (9) extrudés

5. Système selon l'une des revendications 1 à 4, **caractérisé en ce que** lesdits moyens de convoyage (53) comprennent des rouleaux de convoyage (53) des fibres de ladite source de fibres vers lesdits moyens de propulsion (43) des fibres.

6. Système selon les revendications 3 et 5 prises ensemble, **caractérisé en ce que** lesdits rouleaux de convoyage (53) sont logés dans ledit tube de guidage (63).

7. Système selon l'une des revendications 1 à 6, **caractérisé en ce que** ladite source (41) de fibres comprend au moins une bobine continue (45) de fibres associée à des moyens de découpe (54) de la bobine en fibres individuelles.

8. Système selon les revendications 6 et 7 prises ensemble, **caractérisé en ce que** lesdits moyens de découpe (54) de la bobine sont formés par au moins un rouleau de convoyage équipé d'au moins une incision (62) de découpe configurée pour pouvoir couper la bobine (45) au moment du contact entre l'incision (62) de découpe du rouleau de guidage et la bobine (45) de fil.

9. Système selon l'une des revendications 1 à 8, **caractérisé en ce que** ledit dispositif d'insertion est porté par ladite tête d'extrusion par l'intermédiaire d'un support de montage (32).

10. Système selon la revendication 9, dans lequel ladite tête d'extrusion (30) comprend un carter s'étendant le long d'une direction, dite direction longitudinale, **caractérisé en ce que** ledit support de montage (32) portant ledit dispositif de projection (40) est monté mobile en rotation sur ledit carter de ladite tête d'extrusion (30) autour d'un axe s'étendant le long de ladite direction longitudinale.

11. Robot (8) de fabrication additive de structures architecturales comprenant un système de positionnement, tel qu'un bras articulé, piloté par une unité de commande, et un système d'extrusion comprenant une tête d'extrusion (30) montée sur ledit système de positionnement de sorte que le déplacement du système de positionnement portant ladite tête d'extrusion selon une trajectoire prédéterminée permette la fabrication d'une structure architecturale par empilement de couches de cordons de matériau cimentaire, **caractérisé en ce que** ledit système d'extrusion est conforme à l'une des revendications 1 à 10.

12. Procédé d'extrusion de cordons de matériau de construction pour robot de fabrication additive de structures architecturales comprenant :
- une étape d'alimentation (E1) en matériau de construction d'une tête d'extrusion de cordons de matériau de construction à partir d'un réservoir de stockage de matériau de construction,
- une étape d'extrusion (E2) de cordons de matériau de construction par une tête d'extrusion comprenant une bouche d'entrée (31) de matériau de construction et une buse de sortie (34) configurée pour former des cordons de matériau de construction,
- une étape de renforcement (E3) des cordons extrudés par insertion de fibres de renforcement structurel dans les cordons extrudés, utilisant le robot (8) selon la revendication 11.

## Patentansprüche

1. System zum Extrudieren von Strängen (9) aus Baumaterial für einen Roboter (8) zur additiven Fertigung von architektonischen Strukturen (6), umfassend:
einen Baumaterial-Bead-Extrusionskopf (30), der einen Baumaterialeinlass (31), eine Auslassdüse (34), die ausgestaltet ist, Baumaterial-Beads (9) auszubilden, und eine Pumpendosiervorrichtung (51) umfasst, die ausgestaltet ist, das Baumaterial von der Einlassöffnung (31) zur Auslassdüse (34) zu befördern, wobei der Extrusionskopf (30) dazu bestimmt ist, von dem Roboter (8) zur additiven Fertigung entlang einer bestimmten Bahn bewegt zu werden, um eine architektonische Struktur (6) durch Anordnen von Schichten der extrudierten Stränge (8) auszubilden,
einen Kreislauf (20) zur Versorgung des Extrusionskopfes (30) mit Baumaterial, der einen Vorratstank (10) für das Baumaterial, eine Versorgungsleitung (21) für das Baumaterial, die den Vorratstank (10) und den Extrusionskopf (30) verbindet, und eine Druckerhöhungspumpe (22) für die Versorgungsleitung (21) für das Baumaterial aus dem Vorratstank (10) umfasst,
**dadurch gekennzeichnet, dass** das System zudem eine Vorrichtung (40) zum Ausstoßen von Fasern (48) für die strukturelle Verstärkung der extrudierten Stränge (9) umfasst, die angepasst ist, in die durch den Extrusionskopf extrudierten Stränge Fasern (48) zur strukturellen Verstärkung dieser Stränge auszustoßen und einzubringen, worin die Vorrichtung zum Ausstoßen von Fasern umfasst:
eine Quelle (41) von Fasern,
Mittel zum Vorschub (43) der Fasern in den extrudierten Strängen,
Mittel (42) zum Transportieren der Fasern von der Faserquelle (41) zu den Mitteln zum Vorschub (43) der Fasern.

2. System nach Anspruch 1, **dadurch gekennzeichnet, dass** die Mittel zum Vorschub der Fasern (43) ausgestaltet sind, die Fasern (48) in den extrudierten Strängen (9) in eine Richtung vorzutreiben, die nicht kollinear zu der Richtung ist, in der sich die extrudierten Stränge nach dem Extrudieren erstrecken.

3. System nach einem der Ansprüche 1 oder 2, **dadurch gekennzeichnet, dass** die Fasern (48) metallisch sind und dass die Vorschubmittel (43) für die Metallfasern einen hohlen Elektromagneten (64) umfassen, der um ein Führungsrohr (63) der Metallfasern herum angeordnet ist, worin der Elektromagnet (64) mit einer elektrischen Stromquelle (65) verbunden ist, um ein Magnetfeld für den Vorschub der Metallfasern (48) in dem Führungsrohr (63) erzeugen zu können.

4. System nach Anspruch 3, **dadurch gekennzeichnet, dass** die elektrische Stromquelle (65) Steuervorrichtungen (66) für die dem Elektromagneten (64) zugeführte elektrische Energie umfasst, die mit einer Steuereinheit der Steuervorrichtungen (66) verbunden sind, um die Eindringtiefe der in die extrudierten Schnüre (9) geworfenen Fasern (48) einstellen zu können.

5. System nach einem der Ansprüche 1 bis 4, **dadurch gekennzeichnet, dass** die Fördermittel (53) Rollen (53) umfassen, um die Fasern von der Faserquelle zu den Mitteln zum Vorschub der Fasern (43) zu befördern.

6. System nach den Ansprüchen 3 und 5 zusammengenommen, **dadurch gekennzeichnet, dass** die Förderrollen (53) in dem Führungsrohr (63) untergebracht sind.

7. System nach einem der Ansprüche 1 bis 6, **dadurch gekennzeichnet, dass** die genannte Faserquelle (41) mindestens eine kontinuierliche Faserspule (45) umfasst, die mit Mitteln (54) zum Schneiden der Spule in einzelne Fasern verbunden ist.

8. System nach den Ansprüchen 6 und 7 zusammengenommen, **dadurch gekennzeichnet, dass** die Mittel (54) zum Schneiden der Spule durch mindestens eine Transportrolle ausgebildet werden, die mit mindestens einem Schneideeinschnitt (62) versehen ist, der ausgestaltet ist, die Spule (45) im Moment des Kontakts zwischen dem Schneideeinschnitt (62) der Führungsrolle und der Fadenspule (45) zu schneiden.

9. System nach einem der Ansprüche 1 bis 8, **dadurch gekennzeichnet, dass** die Einbringvorrichtung über einen Montageträger (32) von dem Ausziehkopf getragen wird.

10. System nach Anspruch 9, bei dem der Extrusionskopf (30) ein Gehäuse aufweist, das sich in eine Richtung erstreckt, die als Längsrichtung bezeichnet wird, **dadurch gekennzeichnet, dass** der Montageträger (32), der die Ausstoßvorrichtung (0) trägt, drehbar an dem Gehäuse des Extrusionskopfes (30) um eine Achse montiert ist, die sich in die Längsrichtung erstreckt.

11. Roboter (8) für die additive Fertigung von architektonischen Strukturen, der ein Anordnungssystem, wie z.B. einen Gelenkarm, der von einer Steuereinheit gesteuert wird, und ein Extrusionssystem umfasst, das einen Extrusionskopf (30) umfasst, der an dem Anordnungssystem angebracht ist, so dass die Bewegung des Anordnungssystem, das den Extrusionskopf entlang einer bestimmten Bahn trägt, die Fertigung einer architektonischen Struktur durch Anordnen von Schichten von Strängen aus zementartigem Material ermöglicht, **dadurch gekennzeichnet, dass** das Extrusionssystem einem der Ansprüche 1 bis 10 entspricht.

12. Verfahren zum Extrudieren von Strängen aus Baumaterial für Roboter zur additiven Fertigung von architektonischen Strukturen, umfassend:
einen Schritt zum Zuführen (E) von Baumaterial zu einem Kopf zum Extrudieren von Baumaterial-Beads aus einem Baumaterialvorratsbehälter,
einen Schritt zum Extrudieren (E2) von Material-Beads durch einen Extrusionskopf, der einen Baumaterialeinlass (31) und eine Auslassdüse (34) umfasst, die ausgestaltet, Baumaterial-Beads auszubilden,
einen Schritt zur Verstärkung (E3) der extrudierten Stränge durch Einbringen von strukturellen Verstärkungsfasern in die extrudierten Stränge, unter Verwendung des Roboters (8) nach Anspruch 11.

## Claims

1. System for extruding cords (9) of building material for robot (8) for additive manufacturing of architectural structures (6) comprising:
- a building material bead extrusion head (30) comprising a building material inlet (31), an outlet nozzle (34) configured to form building material beads (9) and a pump metering device (51) configured to be able to convey the building material from the inlet mouth (31) to the outlet nozzle (34), said extrusion head (30) being intended to be moved by the robot (8) additive manufacturing along a predetermined trajectory to form an architectural structure (6) by stacking layers of said extruded cords (8),
- a construction material supply circuit (20) to said extrusion head (30) comprising a construction material storage tank (10), a construction material supply line (21) connecting said storage (10) and said extrusion head (30), and a booster pump (22) of said supply pipe (21) of building material from the storage tank (10),
**characterized in that** it further comprises a device (40) for projecting fibers (48) for the structural reinforcement of the extruded cords (9) adapted to be able to project and insert into the cords extruded by the said extrusion head, fibers (48) structural reinforcement of these cords, said fiber throwing device comprising:
- a source (41) of fibers,
- means of propulsion (43) of the fibers in the extruded cords,
- means (42) for conveying the fibers from the source (41) of fibers to the means for propelling (43) the fibers.

2. System according to Claim 1, **characterized in that** the said means for propelling the fibers (43) are configured to propel the fibers (48) in the cords (9) extruded according to a direction non-collinear to the direction along which the cords extruded extend after extrusion.

3. System according to one of Claims 1 or 2, **characterized in that** the said fibers (48) are metallic and **in that** the said means of propulsion (43) of the metallic fibers comprise a hollow electromagnet (64) arranged around a guide (63) of the metal fibers, said electromagnet (64) being connected to an electric power source (65) so as to be able to create a magnetic field for propelling the metal fibers (48) in the said guide tube (63).

4. System according to claim 3, **characterized in that** said electric power source (65) comprises control devices (66) of the electric energy supplied to said electromagnet (64) connected to a control unit of the control devices (66 ) so as to be able to set the depth of penetration of the fibers (48) projected into the cords (9) extruded

5. System according to one of Claims 1 to 4, **characterized in that** the said means for conveying (53) comprise rollers (53) for conveying the fibers from the said source of fibers towards the said means for propelling the fibers (43).

6. System according to claims 3 and 5 taken together, **characterized in that** said conveying rollers (53) are housed in said guide tube (63).

7. System according to one of Claims 1 to 6, **characterized in that** the said source (41) of fibers comprises at least one continuous reel (45) of fibers associated with means (54) for cutting the reel into individual fibers.

8. System according to claims 6 and 7 taken together, **characterized in that** said means (54) for cutting the reel are formed by at least one conveying roller equipped with at least one cutting incision (62) configured to be able to cut the spool (45) at the moment of contact between the cutting incision (62) of the guide roll and the spool (45) of thread.

9. System according to one of Claims 1 to 8, **characterized in that** the said insertion device is carried by the said extraction head via a mounting support (32).

10. System according to Claim 9, in which the said extrusion head (30) comprises a casing extending along a direction, called the longitudinal direction, **characterized in that** the said mounting support (32) carrying the said projection device (0) is rotatably mounted on said casing of said extrusion head (30) about an axis extending along said longitudinal direction.

11. Robot (8) for additive manufacturing of architectural structures comprising a positioning system, such as an articulated arm, controlled by a control unit, and an extrusion system comprising an extrusion head (30) mounted on said positioning so that the movement of the positioning system carrying said extrusion head along a predetermined trajectory allows the manufacture of an architectural structure by stacking layers of cords of cementitious material, **characterized in that** said extrusion system conforms to one of claims 1 to 10.

12. Method for extruding cords of building material for additive manufacturing robots of architectural structures, comprising:
- a step for supplying (El) building material to a head for extruding beads of building material from a building material storage tank,
- a step for extruding (E2) beads of material by an extrusion head comprising a construction material inlet (31) and an outlet nozzle (34) configured to form beads of construction material,
- a step of reinforcing (E3) the extradited cords by inserting structural reinforcing fibers into the extradited cords, using the robot (8) according to claim 11.
